# EUROPÄISCHE PATENTSCHRIFT

(11) **EP 2 613 983 B1**
(45) Veröffentlichungstag und Bekanntmachung des Hinweises auf die Patenterteilung: **01.03.2017**
(21) Anmeldenummer: 11735865.5
(22) Anmeldetag: 18.07.2011
(51) Int. Cl.: B60T 1/06, B60T 7/04, B60T 7/10, B60T 7/12, B60T 8/172, B60T 8/1755, B60T 8/32, B60T 8/34, B60T 11/10, B60T 13/58, B60T 13/66, B60T 13/74, B60T 17/22, F16D 65/14, B60T 8/24

(54) **VERFAHREN ZUM EINSTELLEN DER VON EINER FESTSTELLBREMSE AUSGEÜBTEN KLEMMKRAFT**
METHOD FOR ADJUSTING THE CLAMPING FORCE EXERTED BY A PARKING BRAKE
PROCÉDÉ POUR RÉGLER LA FORCE DE SERRAGE EXERCÉE PAR UN FREIN DE STATIONNEMENT

(30) Priorität: 10.09.2010 DE 102010040572
(43) Veröffentlichungstag der Anmeldung: 17.07.2013
(73) Patentinhaber: Robert Bosch GmbH, 70442 Stuttgart (DE)
(72) Erfinder: BAEHRLE-MILLER, Frank, 71101 Schoenaich (DE); ROTERS, Lars, Bietigheim-Bissingen 74321 (DE); BLATTERT, Dieter, 74366 Kirchheim/Neckar (DE)
(86) Internationale Anmeldenummer: PCT/EP2011/062274
(87) Internationale Veröffentlichungsnummer: WO 2012/031806

(56) Entgegenhaltungen:
- WO-A1-2005/042320
- WO-A1-2005/073043
- WO-A1-2006/067196
- DE-A1- 10 104 498
- DE-A1- 10 345 485
- DE-A1-102005 001 838
- DE-A1-102005 042 282
- DE-A1-102005 046 991
- DE-A1-102006 016 543

## Beschreibung

Die Erfindung bezieht sich auf ein Verfahren zum Einstellen der von einer Feststellbremse ausgeübten Klemmkraft in einem Fahrzeug.

### Stand der Technik

Es sind Feststell- bzw. Parkbremsen in Fahrzeugen bekannt, über die ein Fahrzeug im Stillstand durch Erzeugen einer permanenten Klemmkraft dauerhaft festgesetzt werden kann. Feststellbremsen können einen elektrischen Bremsmotor umfassen, dessen Stellbewegung über ein Getriebe, beispielsweise ein Spindelantrieb, unmittelbar auf die Bremskolben an den hydraulischen Radbremsen wirkt. Der elektrische Bremsmotor ist hierbei so dimensioniert, dass das Fahrzeug bis zu einer bestimmten Hangneigung ausschließlich über die Bremswirkung des Bremsmotors gehalten werden kann. Bei darüber hinausgehenden Hangneigungen wird eine zusätzliche, hydraulische Klemmkraft durch Betätigen der hydraulischen Radbremseinrichtung erzeugt.

Bekannt ist aus der DE10345485A1 eine Bremsvorrichtung, die eine Betriebs- und Feststellbremsfunktion umfasst. Die von der Bremsvorrichtung bereitzustellende Klemmkraft wird zunächst hydraulisch erzeugt und dann gegebenenfalls durch eine zusätzliche Krafterzeugungseinrichtung unterstützt.

Aus der WO2005/073043A1 ist ein Verfahren zum Betreiben einer Bremsausrüstung eines Fahrzeugs bekannt, die einen elektrisch steuerbare Betriebsbremsanlage umfasst, die dazu eingerichtet ist, unabhängig von einer Fahrerbetätigung Bremskräfte zu erzeugen, und die eine elektrisch steuerbare Feststellbremsanlage umfasst, die dazu eingerichtet ist, Bremskräfte zu erzeugen und diese zu halten

Ferner ist aus der DE10104498A1 ein Verfahren zum Aktivieren einer Anfahrhilfe-Funktion bekannt, die das Anfahren eines Fahrzeugs an einer Steigung unterstützt, indem sie ein das Fahrzeug an der Steigung haltendes Bremsmoment in einer Betriebsbremse und/oder einer Feststellbremse in Abhängigkeit von externen und/oder internen Größen aufbaut und bis zum Aufbau eines zum Anfahren erforderlichen Antriebsmoment aufrecht hält. Dabei erfolgt eine Aktivierung der Anfahrhilfe-Funktion nur bei einer Bremsmomentenerhöhung über das zum Stillstand erforderliche Bremsmoment hinaus.

### Offenbarung der Erfindung

Der Erfindung liegt die Aufgabe zugrunde, die Zuspann- bzw. Klemmkraft in der Feststellbremse eines Fahrzeugs in ökonomischer Weise bereitzustellen und zugleich die Belastung der Feststellbremse zu reduzieren.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren dient zum Einstellen der von einer Feststellbremse ausgeübten Klemmkraft im Stillstand eines Fahrzeugs. Die Feststellbremse umfasst eine elektromotorische Bremsvorrichtung mit einem elektrischen Bremsmotor und außerdem eine hydraulische Bremsvorrichtung, über die eine hydraulische Klemmkraft erzeugbar ist. Die hydraulische Bremsvorrichtung ist hierbei vorteilhafterweise mit der hydraulischen Radbremse identisch, über die das Fahrzeug im normalen Fahrbetrieb abgebremst wird. Der elektrische Bremsmotor wirkt auf den Bremskolben der hydraulischen Bremsvorrichtung. Über die elektrische und die hydraulische Bremsvorrichtung kann jeweils ein einstellbarer Anteil an der Gesamtklemmkraft erzeugt werden, wobei der jeweilige Anteil zwischen null und einem Maximalwert veränderlich einstellbar ist.

Bei dem erfindungsgemäßen Verfahren wird zumindest innerhalb eines definierten Betriebsbereichs der in der hydraulischen Bremsvorrichtung herrschende, durch eine Fahrerbetätigung erzeugte hydraulische Vordruck für die Generierung einer hydraulischen Klemmkraft herangezogen. Für den Fall, dass die hydraulische Klemmkraft zum Erreichen einer vorgegebenen Ziel-Klemmkraft nicht ausreicht, wird ergänzend eine in der elektromotorischen Bremsvorrichtung erzeugte Klemmkraft generiert. Der Vordruck wird durch einen manuellen Eingriff durch den Fahrer in die hydraulische Bremsvorrichtung erzeugt. Sofern die hydraulische Bremsvorrichtung, welche Bestandteil der Feststellbremse ist, mit der hydraulischen Radbremse identisch ist, handelt es sich bei dem Fahrereingriff um die Bremspedalbetätigung, über die vom Fahrer ein hydraulischer Bremsdruck erzeugt wird, der als Vordruck für das Erzeugen einer Klemmkraft in der Feststellbremse herangezogen werden kann.

Die hydraulische Klemmkraft und die elektrische Klemmkraft ergänzen sich additiv zu der Ziel-Klemmkraft, welche über die Feststellbremse eingestellt werden soll. Dadurch ist zum einen sichergestellt, dass die geforderte Klemmkraft erreicht wird, zum andern wird die Belastung der Komponenten der Feststellbremse herabgesetzt, da zumindest in bestimmten, definierten Betriebssituationen keine über die Ziel-Klemmkraft hinausgehende Kraft in der elektrischen bzw. hydraulischen Bremsvorrichtung erzeugt wird. Die auf den Bremskolben wirkenden Kräfte sind, verglichen mit dem Stand der Technik, herabgesetzt.

Um sicherzustellen, dass die hydraulische Klemmkraft während des Stillstands des Fahrzeugs dauerhaft wirksam ist, wird zweckmäßigerweise der elektrische Bremsmotor in eine einen Bremskolben der hydraulischen Bremsvorrichtung arretierende Position verstellt. Dies gilt sowohl für den Fall, dass die Klemmkraft ausschließlich über den hydraulischen Vordruck erreicht wird als auch in Fällen, in denen die Klemmkraft über einen Anteil des hydraulischen Vordrucks und außerdem über einen Anteil des elektrischen Bremsmotors erzeugt wird. Auf diese Weise kann die Wirkung des hydraulischen Drucks konserviert werden.

Gegebenenfalls wird über eine fahrerunabhängige Betätigung der hydraulischen Bremsvorrichtung eine hydraulische Klemmkraft erzeugt, die über die Klemmkraft hinausgeht, welche allein aufgrund des hydraulischen Vordrucks bereitgestellt werden kann. Dies erfolgt insbesondere in Phasen, in denen allein aus der Summe der elektrischen Klemmkraft und der auf den Vordruck zurückgehenden hydraulischen Klemmkraft die geforderte Ziel-Klemmkraft nicht erreicht werden kann, beispielsweise bei großen Hangneigungen. In Standardfällen, in denen die Hangneigung ein definiertes Maß von beispielsweise 20 % nicht übersteigt, wird andererseits eine dieser Hangneigung zugeordnete, konstante Ziel-Klemmkraft definiert, welche allein aus der Summe von elektrischer Klemmkraft und auf den hydraulischen Vordruck zurückgehender Klemmkraft bereitgestellt wird, wobei der Anteil der elektrischen Klemmkraft variabel bzw. komplementär zu dem hydraulischen Klemmkraftanteil eingestellt wird.

Gemäß weiterer zweckmäßiger Ausführung wird für den Fall, dass der hydraulische Vordruck unterhalb eines ersten Druck-Schwellenwertes liegt, die Ziel-Klemmkraft vollständig über die elektrische Klemmkraft bereitgestellt. Hierbei liegt in der elektrischen Bremsvorrichtung insbesondere eine Nominal-Klemmkraft an, die auf eine bestimmte Hangneigung von beispielsweise 20 % abgestimmt ist. Der erste Druck-Schwellenwert liegt beispielsweise bei 65 bar. Sofern der Vordruck den ersten Druck-Schwellenwert nicht übersteigt, erzeugt die elektrische Bremsvorrichtung die Nominal-Klemmkraft ungeachtet der auf den Vordruck zurückgehenden hydraulischen Klemmkraft, die sich additiv mit der elektrischen Klemmkraft zur Gesamtklemmkraft zusammensetzt.

Gemäß weiterer zweckmäßiger Ausführung wird die Ziel-Klemmkraft über die hydraulische Klemmkraft und ergänzend über die elektromotorische Klemmkraft generiert, falls der hydraulische Vordruck zwischen einem ersten Druck-Schwellenwert und einem zweiten, höheren Druck-Schwellenwert liegt. Der erste Druck-Schwellenwert beträgt beispielsweise 65 bar, der zweite Druck-Schwellenwert beispielsweise bei 140 bar. Der elektromotorische Anteil der Klemmkraft tritt ergänzend hinzu, wobei die Höhe der elektrischen Klemmkraft so bemessen ist, dass eine geforderte Ziel-Klemmkraft erreicht wird, welche, wie vorbeschrieben, zweckmäßigerweise so eingestellt wird, dass das Fahrzeug bei einem Stillstand auf einer definierten Hangneigung sicher festgesetzt werden kann.

Gemäß noch einer weiteren zweckmäßigen Ausführung wird für den Fall, dass der hydraulische Vordruck einen Druck-Schwellenwert überschreitet, der Anteil der elektromotorischen Klemmkraft an der Ziel-Klemmkraft um einen konstanten Betrag reduziert. Der betreffende Druck-Schwellenwert ist insbesondere identisch mit dem zweiten, oberen Druck-Schwellenwert, welcher die obere Grenze des Bereichs markiert, in welchem sich die elektrische und die hydraulische Klemmkraft mit jeweils variablem Anteil zur Ziel-Klemmkraft ergänzen. Indem nun in Arbeitsbereichen oberhalb des zweiten Druck-Schwellenwertes der Anteil der elektromotorischen Klemmkraft nicht um einen variablen Bestandteil des hydraulischen Vordruckes reduziert wird, sondern lediglich um einen konstanten Betrag, ist sichergestellt, dass auch bei sehr hohen hydraulischen Vordrücken aus Sicherheitsgründen eine elektrische Mindest-Klemmkraft bereitgestellt wird. Hiermit wird eine sichere Abstützung des Bremskolbens über den elektrischen Bremsmotor bzw. die Spindel gewährleistet. Der konstante Betrag, um den der von dem elektrischen Bremsmotor aufzubringende Anteil reduziert wird, entspricht zweckmäßigerweise derjenigen hydraulischen Klemmkraft, die bei dem oberen Druck-Schwellenwert anliegt.

Zur Ermittlung des hydraulischen Vordrucks wird zweckmäßigerweise eine Druckmessung im hydraulischen Bremssystem des Fahrzeugs durchgeführt. Es kann vorteilhaft sein, den Vordruck an einer die Feststellbremse bildenden hydraulischen Radbremse aus dem Vordruck einer weiteren Radbremse zu ermitteln, insbesondere durch Subtrahieren einer Drucktoleranz von beispielsweise 50 %. In der Regel ist über einen Drucksensor der aktuelle Vordruck an den Radbremsen an der Vorderachse des Fahrzeuges ermittelbar. Steht dieser Wert zur Verfügung, kann daraus der Vordruck an den die Feststellbremse bildenden Radbremsen an der Hinterachse des Fahrzeuges geschätzt werden, gegebenenfalls unter Berücksichtigung der Drucktoleranz.

Das erfindungsgemäße Verfahren läuft in einem Regel- bzw. Steuergerät ab, welches Bestandteil der Feststellbremse im Fahrzeug ist bzw. mit der Feststellbremse bzw. Komponenten der Feststellbremse kommuniziert. Gegebenenfalls ist das Regel- bzw. Steuergerät Bestandteil eines ESP-Steuergeräts (elektronisches Stabilitätsprogramm) oder bildet eine Zusatzfunktion auf einem ESP-Steuergerät oder wird als eigenständiges Steuergerät bereitgestellt, welches mit dem ESP-Steuergerät kommunizieren kann.

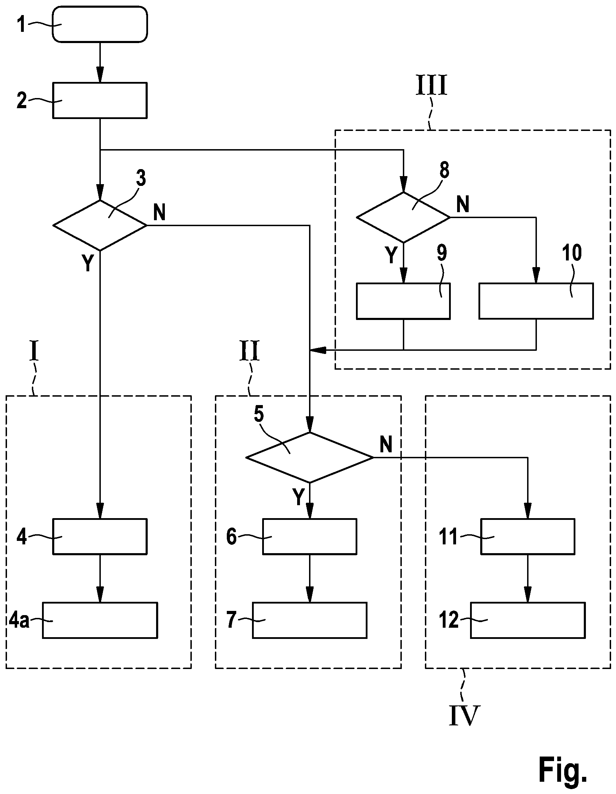

Weitere Vorteile und zweckmäßige Ausführungen sind den weiteren Ansprüchen, der Figurenbeschreibung und der Zeichnung zu entnehmen, in der ein Ablaufdiagramm zur Durchführung des Verfahrens zum Einstellen der von einer Feststellbremse ausgeübten Klemmkraft dargestellt ist.

Das in der Figur dargestellte Ablaufschema bezieht sich auf eine Feststellbremse in einem Fahrzeug, die sowohl eine elektromotorische Bremsvorrichtung als auch eine hydraulische Bremsvorrichtung umfasst, wobei über die elektromotorische und über die hydraulische Bremsvorrichtung jeweils ein Klemmkraftanteil zum Erreichen einer Ziel-Klemmkraft F_{N},_{Ziel} eingestellt werden kann. Die elektromotorische Bremsvorrichtung umfasst einen elektrischen Bremsmotor, der auf den Bremskolben der hydraulischen Bremsvorrichtung eine Stellkraft ausübt, wobei die hydraulische Bremsvorrichtung Bestandteil der hydraulischen Radbremse im Fahrzeug ist, über die das Fahrzeug im regulären Fahrbetrieb abgebremst werden kann.

In einem ersten Verfahrensschritt 1 wird zunächst eine Verriegelungsanforderung an die Feststellbremse festgestellt. Im nächsten Verfahrensschritt 2 erfolgt die Ermittlung des hydraulischen Vordrucks p_{h,vor} in der hydraulischen Bremsvorrichtung, welche Bestandteil der Feststellbremse ist. Der hydraulische Vordruck ist derjenige hydraulische Druck, welcher in der Bremsvorrichtung durch Betätigen des Bremspedals vom Fahrer erzeugt wird. Der hydraulische Vordruck p_{h,HA} an den die Feststellbremse bildenden Radbremsen an der Hinterachse des Fahrzeugs wird aus dem hydraulischen Vordruck p_{h,vor} des Bremssystems ermittelt, welcher mithilfe eines Drucksensors gemessen wird. Da der hydraulische Druck an der Hinterachse von demjenigen an der Vorderachse abweichen kann, beispielsweise aufgrund eines Eingriffs eines elektronischen Bremsdifferenzials, wird ein Sicherheitsabschlag für den hydraulischen Vordruck an der Hinterachse durchgeführt, der beispielsweise 50 % beträgt; in diesem Fall beträgt der hydraulische Vordruck an der Hinterachse nur 50 % des hydraulischen Vordrucks an der Vorderachse.

Im Verfahrensschritt 3 erfolgt eine Abfrage, ob der hydraulische Vordruck p_{h,vor} einen unteren, ersten Druck-Schwellenwert p_{h,65} unterschreitet. Sofern dies der Fall ist, also der hydraulische Vordruck kleiner ist als der untere Druck-Schwellenwert p_{h,65}, wird der Ja-Verzweigung ("Y") folgend zu den nächsten Verfahrensschritten 4 und 4a fortgefahren, die einen ersten Ausführungsblock I bilden, in welchem die Ziel-Klemmkraft F_{N,Ziel} vollständig über die elektrische Klemmkraft F_{N},ₑₗ des elektrischen Bremsmotors bereitgestellt wird. Eine eventuell bestehende hydraulische Klemmkraft F_{N,h}, welche auf den hydraulischen Vordruck P_{h,vor} zurückgeht, setzt sich zwar additiv mit der elektrischen Klemmkraft F_{N,el} zu einer Gesamtklemmkraft F_{N} zusammen. Dennoch wird über die elektrische Bremsvorrichtung eine Nominal-Klemmkraft bereitgestellt, welche auf eine Hangneigung mit definierter Neigung von beispielsweise 20° gerichtet ist. Dementsprechend wird im Verfahrensschritt 4 die elektrische Klemmkraft F_{N},ₑₗ auf den Nominalwert gesetzt und im Verfahrensschritt 4a die Klemmkraft durch eine entsprechende Ansteuerung des elektrischen Bremsmotors umgesetzt.

Sofern die Abfrage im Verfahrensschritt 3 ergibt, dass der hydraulische Vordruck p_{h,vor} nicht kleiner ist als der untere Druck-Schwellenwert p_{h,65}, wird der Nein-Verzweigung ("N") folgend zum zweiten Ausführungsblock II mit den Verfahrensschritten 5 bis 7 fortgefahren. Der Ausführungsblock II benötigt als zusätzliche Information die Höhe eines Hydraulikanteils F_{Adapt,} der in einem Ausführungsblock III ermittelt wird, welcher parallel nach dem Verfahrensschritt 2 durchlaufen wird und Verfahrensschritte 8 bis 10 enthält. Gemäß der Abfrage im Verfahrensschritt 8 wird im Ausführungsblock III zunächst abgefragt, ob der hydraulische Vordruck p_{h,vor} eine untere Schwelle p_{h,15} unterschreitet. Sofern dies der Fall ist, wird der Ja-Verzweigung folgend zum Verfahrensschritt 9 fortgefahren, andernfalls zum Verfahrensschritt 10. Im Verfahrensschritt 9 wird der Hydraulikanteil F_{Adapt} auf den Wert null gesetzt, im Verfahrensschritt 10 wird der Hydraulikanteil F_{Adapt} als Funktion des Vordrucks p_{h,vor} ermittelt, jedoch unter Abzug des Drucks an der Niedrigschwelle, die beispielsweise 15 bar beträgt.

Der im Ausführungsblock III ermittelte Hydraulikanteil F_{Adapt} fließt als zusätzliche Information in den Ausführungsblock II ein. Dort wird in einem Verfahrensschritt 5 eine Abfrage gestartet, ob der als Kraft vorliegende Hydraulikanteil F_{Adapt} innerhalb eines Wertebereichs zwischen null und einer oberen Grenze F_{Lim,8.5} liegt, welche denjenigen Wert markiert, den die hydraulische Bremsvorrichtung der Feststellbremse mit Erreichen eines oberen Schwellenwerts p_{h,140} ausübt. Sofern die Abfrage nach Verfahrensschritt 5 zutrifft, also der Hydraulikanteil F_{Adapt} innerhalb der durch die obere Grenze F_{Lim,8.5} markierten Bereiches liegt, wird der Ja-Verzweigung folgend zum Verfahrensschritt 6 fortgefahren, in welchem die von dem elektrischen Bremsmotor auszuführende Klemmkraft F_{N},ₑₗ durch die Differenz der Nominal-Klemmkraft und dem Hydraulikanteil F_{Adapt} ermittelt wird. Im nächsten Verfahrensschritt 7 wird anschließend die Gesamtklemmkraft durch Beaufschlagen des elektrischen Bremsmotors mit der im Verfahrensschritt 6 ermittelten elektrischen Klemmkraft F_{N,el} eingestellt, wobei zusätzlich die hydraulische Klemmkraft F_{N,h} wirksam ist, welche auf den aktuellen Vordruck p_{h,vor} im hydraulischen Bremssystem zurückzuführen ist. Über die Verfahrensschritte 5 bis 7 im Ausführungsblock II wird somit der elektrische Anteil der Klemmkraft variabel an den bestehenden Anteil der hydraulischen Klemmkraft so angepasst, dass die Ziel-Klemmkraft F_{N,Ziel} erreicht wird. Die Ziel-Klemmkraft F_{N,Ziel ist} insbesondere auf einen Wert gesetzt, dass das Fahrzeug bei einer definierten Hangneigung von beispielsweise 20 % sicher im Stillstand steht.

Sofern die Abfrage im Verfahrensschritt 5 ergibt, dass der Hydraulikanteil F_{Adapt} die obere Grenze F_{Lim,8.5} überschreitet, liegt auch ein Überschreiten des oberen Druck-Schwellenwerts p_{h,140} des hydraulischen Vordrucks p_{h,vor} vor. In diesem Fall wird der Nein-Verzweigung folgend zum Verfahrensschritt 11 fortgefahren, der gemeinsam mit einem weiteren Verfahrensschritt 12 einen Ausführungsblock IV bildet. Im Verfahrensschritt 11 erfolgt eine Begrenzung der elektrischen Klemmkraft F_{N,el} auf einen Maximalwert, der sich durch Subtraktion der oberen Grenze F_{Lim,8.5} von der Nominal-Klemmkraft bei definierter Hangneigung von beispielsweise 20 % ergibt. Im folgenden Verfahrensschritt 12 wird anschließend die Gesamt-Klemmkraft eingestellt, welche sich aus dem elektromotorischen Anteil und dem hydraulischen Anteil ergibt, wobei der elektromotorische Anteil wie in Verfahrensschritt 11 ermittelt im elektrischen Bremsmotor eingestellt wird und der hydraulische Anteil auf den aktuellen Vordruck zurückgeht, der oberhalb des oberen Druck-Schwellenwerts p_{h,140} liegt.

## Patentansprüche

1. Verfahren zum Einstellen der von einer Feststellbremse ausgeübten Klemmkraft (F_{N}), die von einer elektromotorischen Bremsvorrichtung, welche einen elektrischen Bremsmotor umfasst, und von einer hydraulischen Bremsvorrichtung aufgebracht wird, **dadurch gekennzeichnet, dass** der in der hydraulischen Bremsvorrichtung herrschende, über eine Fahrerbetätigung erzeugte hydraulische Vordruck (p_{h,vor}) für die Generierung einer hydraulischen Klemmkraft (F_{N,h}) herangezogen wird und für den Fall, dass die hydraulische Klemmkraft (F_{N,h}) zum Erreichen der Ziel-Klemmkraft (F_{N,Ziel}) nicht ausreicht, ergänzend eine in der elektromotorischen Bremsvorrichtung erzeugte Klemmkraft (F_{N},ₑₗ) generiert wird und diese, für den Fall, dass der hydraulische Vordruck (p_{h, vor})einen Druck-Schwellenwert (p_{h, 140}) überschreitet, um einen konstanten Betrag reduziert wird.

2. Verfahren nach Anspruch 1, **dadurch gekennzeichnet, dass** der elektrische Bremsmotor in eine einen Bremskolben der hydraulischen Bremsvorrichtung arretierende Position verstellt wird.

3. Verfahren nach Anspruch 1 oder 2, **dadurch gekennzeichnet, dass** für den Fall, dass der hydraulische Vordruck (p_{h,vor}) unterhalb eines ersten Druck-Schwellenwertes (p_{h,65}) liegt, die Ziel-Klemmkraft (F_{N,Ziel}) vollständig über eine in der elektromotorischen Bremsvorrichtung erzeugte Nominal-Klemmkraft (F_{N,et,20}) bereitgestellt wird.

4. Verfahren nach einem der Ansprüche 1 bis 3, **dadurch gekennzeichnet, dass** für den Fall, dass der hydraulische Vordruck (p_{h,vor}) zwischen einem ersten Druck-Schwellenwert (p_{h,65}) und einem zweiten Druck-Schwellenwert (p_{h,140}) liegt, die Ziel-Klemmkraft (F_{N,Ziel}) über die hydraulische Klemmkraft (F_{N,h}) und ergänzend über die elektromotorische Klemmkraft (F_{N,el}) generiert wird.

5. Verfahren nach Anspruch 1, **dadurch gekennzeichnet, dass** der konstante Betrag, um den der von dem elektrischen Bremsmotor aufzubringende Anteil reduziert wird, der hydraulischen Klemmkraft (F_{N,h}) entspricht, die bei dem Druck-Schwellenwert (p_{h,140}) anliegt.

6. Verfahren nach Anspruch 4 oder 5, **dadurch gekennzeichnet, dass** der Druck-Schwellenwert (p_{h,140}) mit dem zweiten Druck-Schwellenwert (p_{h,140}) identisch ist.

7. Verfahren nach einem der Ansprüche 1 bis 6, **dadurch gekennzeichnet, dass** der hydraulische Vordruck (p_{h,vor}) aus dem gemessenen Druck an einer Radbremse im Fahrzeug ermittelt wird.

8. Regel- bzw. Steuergerät in dem ein Verfahren nach einem der Ansprüche 1 bis 7 durchgeführt wird.

9. Feststellbremse in einem Fahrzeug mit einem Regel- bzw. Steuergerät nach Anspruch 8.

## Claims

1. Method for adjusting the clamping force (F_{N}) which is exerted by a parking brake and which is applied by an electromotive brake device which comprises an electric brake motor, and by a hydraulic brake device, **characterized in that** the hydraulic emission pressure (p_{h,vor}) which is present in the hydraulic brake device and is generated by means of a driver activation operation is used for generating a hydraulic clamping force (F_{N,h}), and in the event of the hydraulic clamping force (F_{N,h}) not being sufficient to achieve the target clamping force (F_{N,Ziel}), a clamping force (F_{N,el}) which is generated in the electromotive brake device is additionally generated and clamping force (F_{N,el}) is reduced by a constant absolute value in the event of the hydraulic admission pressure (p_{h,vor}) exceeding a pressure threshold value (p_{h,140}).

2. Method according to Claim 1, **characterized in that** the electric brake motor is adjusted into a position which locks a brake piston of the hydraulic brake device.

3. Method according to Claim 1 or 2, **characterized in that** in the event of the hydraulic emission pressure (p_{h,vor}) being below a first pressure threshold value (p_{h,65),} the target clamping force (F_{N,Ziel}) is made available completely by means of a nominal clamping force (F_{N,el,20}) which is generated in the electromotive brake device.

4. Method according to one of Claims 1 to 3, **characterized in that** in the event of the hydraulic emission pressure (p_{h,vor}) being between a first pressure threshold value (p_{h,65}) and a second pressure threshold value (p_{h,140}), the target clamping force (F_{N,Ziel}) is generated by means of the hydraulic clamping force (F_{N,h}) and additionally by means of the electromotive clamping force (F_{N,el}).

5. Method according to Claim 1, **characterized in that** the constant absolute value, by which the portion which is to be provided by the electric brake motor is reduced, corresponds to the hydraulic clamping force (F_{N,h}) which is present at the pressure threshold value (p_{h,140}).

6. Method according to Claim 4 or 5, **characterized in that** the pressure threshold value (p_{h,140}) is identical to the second pressure threshold value (p_{h,140}).

7. Method according to one of Claims 1 to 6, **characterized in that** the hydraulic emission pressure (p_{h,vor}) is determined from the measured pressure at a wheel brake in the vehicle.

8. Closed-loop or open-loop control device in which a method according to one of Claims 1 to 7 is carried out.

9. Parking brake in a vehicle having a closed-loop or open-loop control device according to Claim 8.

## Revendications

1. Procédé pour régler la force de serrage (F_{N}) exercée par un frein de stationnement, qui est appliquée par un dispositif de freinage à moteur électrique, comprenant un moteur de freinage électrique, et par un dispositif de freinage hydraulique, **caractérisé en ce que** la pression hydraulique initiale (p_{h,vor}) régnant dans le dispositif de freinage hydraulique et générée par un actionnement du conducteur est utilisée pour générer une force de serrage hydraulique (F_{N,h}) et si la force de serrage hydraulique (F_{N,h}) ne suffit pas pour atteindre la force de serrage cible (F_{N,Ziel}), une force de serrage (F_{N,el}) générée dans le dispositif de freinage à moteur électrique est générée en complément et celle-ci est réduite d'une valeur constante si la pression hydraulique initiale (p_{h,vor}) dépasse une valeur de seuil de pression (p_{h, 140}).

2. Procédé selon la revendication 1, **caractérisé en ce que** le moteur de freinage électrique est amené dans une position bloquant un piston de freinage du dispositif de freinage hydraulique.

3. Procédé selon la revendication 1 ou 2, **caractérisé en ce que** si la pression hydraulique initiale (p_{h,vor}) est en dessous d'une première valeur de seuil de pression (p_{h,65}), la force de serrage cible (F_{N,Ziel)} est fournie complètement par le biais d'une force de serrage nominale (F_{N,el,20}) générée dans le dispositif de freinage à moteur électrique.

4. Procédé selon l'une quelconque des revendications 1 à 3, **caractérisé en ce que** si la pression hydraulique initiale (p_{h,vor}) est comprise entre une première valeur de seuil de pression (p_{h,65}) et une deuxième valeur de seuil de pression (p_{h,140}), la force de serrage cible (F_{N,Ziel)} est générée par le biais de la force de serrage hydraulique (F_{N,h}) et, en complément, par le biais de la force de serrage à moteur électrique (F_{N,el}).

5. Procédé selon la revendication 1, **caractérisé en ce que** la valeur constante de laquelle la proportion à fournir par le moteur de freinage électrique est réduite correspond à la force de serrage hydraulique (F_{N,h}) qui s'applique à la valeur de seuil de pression (p_{h,140}).

6. Procédé selon la revendication 4 ou 5, **caractérisé en ce que** la valeur de seuil de pression (p_{h,140}) est identique à la deuxième valeur de seuil de pression (pu,140).

7. Procédé selon l'une quelconque des revendications 1 à 6, **caractérisé en ce que** la pression hydraulique initiale (p_{h,vor}) est déterminée à partir de la pression mesurée au niveau d'un frein de roue dans le véhicule.

8. Appareil de réglage ou de commande dans lequel est mis en oeuvre un procédé selon l'une quelconque des revendications 1 à 7.

9. Frein de stationnement dans un véhicule comprenant un appareil de réglage ou de commande selon la revendication 8.
